(19) Europäisches Patentamt

European Patent Office

Office européen des brevets

(11) **EP 1 390 957 B1**

(12) **EUROPEAN PATENT SPECIFICATION**

(45) Date of publication and mention
of the grant of the patent:
**13.10.2004 Bulletin 2004/42**

(51) Int Cl.[7]: **G21K 1/06**

(21) Application number: **02736274.8**

(22) Date of filing: **21.05.2002**

(86) International application number:
**PCT/NL2002/000320**

(87) International publication number:
**WO 2002/095771 (28.11.2002 Gazette 2002/48)**

(54) **MULTI-LAYER MIRROR FOR RADIATION IN THE XUV WAVELENGHT RANGE AND METHOD FOR MANUFACTURE THEREOF**

MEHRSCHICHTSPIEGEL FÜR XUV-STRAHLUNG UND VERFAHREN ZUR DESSEN HERSTELLUNG

MIROIR MULTICOUCHE POUR RAYONNEMENT COMPRIS DANS LA GAMME DE LONGUEURS D'ONDES XUV ET PROCEDE DE FABRICATION

(84) Designated Contracting States:
**AT BE CH CY DE DK ES FI FR GB GR IE IT LI LU MC NL PT SE TR**

(30) Priority: **23.05.2001 NL 1018139**

(43) Date of publication of application:
**25.02.2004 Bulletin 2004/09**

(73) Proprietor: **Stichting voor Fundamenteel Onderzoek der Materie**
**3502 GA Utrecht (NL)**

(72) Inventors:
• **BIJKERK, Frederik**
  **NL-1016 RD Amsterdam (NL)**
• **LOUIS, Eric**
  **NL-3402 ZG Ijsselstein (NL)**
• **KESSELS, Marcus, Josef, Henricus**
  **NL-3431 JC Nieuwegein (NL)**
• **VERHOEVEN, Jan**
  **NL-3628 BN Kockengen (NL)**

• **DEN HARTOG, Markus, Johannes, Harmen**
  **NL-3435 PC Nieuwegein (NL)**

(74) Representative: **Dokter, Hendrik Daniel**
  **Octrooibureau Dokter,**
  **P.O. Box 657**
  **7300 AR Apeldoorn (NL)**

(56) References cited:
**EP-A- 1 091 360**          **US-A- 4 675 889**
**US-A- 5 485 499**

• **PATENT ABSTRACTS OF JAPAN vol. 014, no. 201 (P-1041), 24 April 1990 (1990-04-24) & JP 02 042399 A (AGENCY OF IND SCIENCE & TECHNOL), 13 February 1990 (1990-02-13)**
• **M. CILIA ET AL.: "Ni/Si based multilayer for the reflection of soft x rays in the "water window"" JOURNAL OF APPLIED PHYSICS, vol. 82, no. 9, 1 November 1997 (1997-11-01), pages 4137-4142, XP002195209 cited in the application**

## Description

The invention relates to a multi-layer mirror for radiation with a wavelength in the wavelength range between 0.1 nm and 30 nm (the so-called XUV range), comprising a stack of thin films substantially comprising scattering particles which scatter the radiation, which thin films are separated by separating layers with a thickness in the order of magnitude of the wavelength of the radiation, which separating layers substantially comprise non-scattering particles which do not scatter the radiation the scattering particles being selected from the transition elements cobalt (Co), nickel (Ni), tungsten (W), rhenium (Re) and iridium (Ir), the non-scattering particles being substantially particles of lithium (Li). Such a mirror is known from EP-A 1 091 360.

Multi-layer mirrors for radiation with a wavelength in the XUV range are applied as optical elements in setups in laboratories and production facilities, for instance for lithography in the wavelength range between about 10 nm and 15 nm (the so-called extreme UV range (EUV)), for X-ray fluorescence analysis of elements having a low atomic number Z, or for the purpose of X-ray microscopy on biological preparations.

Known from a publication by M. Cilia and J. Verhoeven in J. Appl. Phys. 82(9), 1 November 1997, is a multi-layer mirror which is built up from thin films of nickel (Ni), separated by separating layers of silicon (Si). This Ni/Si multi-layer mirror is specifically designed for an X-ray microscope in the wavelength range for radiation with a wavelength between 2.4 nm and 4.4 nm, the so-called water window. For radiation with a wavelength in this range the absorption coefficient of water is an order of magnitude smaller than the absorption coefficient of carbon, so that carbon-containing parts in biological preparations can be detected using high contrast. The intensity of the available radiation is determined to a significant extent by the reflectivity of the multi-layer mirrors used.

JP-A-02 042 399 discloses a multilayered reflecting film for an optical element which has a large reflection factor in the wavelength range of soft X-rays. In this multilayered film, nickel is used as a low-refractive-index layer and either lithium, lithium hydride or lithium oxide is used as a high-refractive-index layer.

Also known are multi-layer mirrors with thin films of tungsten (W), likewise separated by separating layers of Si.

It is an object of the invention to provide a multi-layer mirror having a substantially higher reflectivity for radiation in the XUV range than the known multi-layer mirrors.

This object is achieved with a multi-layer mirror of the type specified in the preamble, wherein according to the invention the lithium particles are passivated, being provided in the form of a lithium halogenide.

The choice for Li as non-scattering particles in the separating layers is based on the insight that the reflectivity of the multi-layer mirror is not only increased by increasing the reflectivity of the thin films, for instance by the choice of other scattering particles therein, or by making the surface thereof smoother, but also by reducing the absorption capacity of the separating layers. In the professional field there is a preference for Si, since the manufacture of thin layers from this material is a known and tested method from semiconductor technology, while this material has relatively favourable X-ray optical properties. The choice of Li represents a departure from this general opinion.

In a multi-layer mirror in which according to the invention the lithium particles are passivated, i.e. made chemically inactive, the chemical reactivity in respect of entering into bonds with other elements in the multi-layer mirror is greatly reduced.

Compared to a multi-layer mirror with separating layers of pure lithium, a multi-layer mirror with separating layers of passivated lithium has the advantage that it can be manufactured according to a simpler method.

In an embodiment the lithium particles are preferably provided in the form of lithium fluoride (LiF).

LiF is particularly suitable for application in a multi-layer mirror in an X-ray microscope for biological preparations which are rich in oxygen and carbon atoms precisely because LiF has a good transmission for radiation with wavelengths absorbed by these atoms, so that it is possible to make very contrasty images of these preparations.

In one embodiment the thin films are composed of tungsten and rhenium, preferably in an atomic ratio of about 70% tungsten and about 30% rhenium.

It has been found that thin films of W/Re in an atomic ratio of 70/30 have a particularly smooth surface, which is expressed in a particularly high reflective power.

In an embodiment of the multi-layer mirror according to the invention the stack comprises at least 50 layers of thin film separated by separating layers.

The stack preferably comprises about 100 layers of thin film separated by separating layers, more preferably the stack comprises about 250 layers of thin film separated by separating layers, most preferably the stack comprises about 500 layers of thin film separated by separating layers.

The preference for the highest possible number of layers of thin film separated by separating layers is motivated by the fact that the bandwidth of a multi-layer mirror according to the invention, defined as $\Delta\lambda/\lambda$, decreases as the number of layers of thin film increases. A lower bandwidth implies a higher wavelength selectivity of the multi-layer mirror. (In the quotient $\Delta\lambda/\lambda$, $\lambda$ represents the wavelength of the reflected radiation and $\Delta\lambda$ represents the width of the reflection curve at an intensity equal to half the intensity at the maximum of this curve).

It has been found that a multi-layer mirror with about 250 of such layers reflects about 23% of radiation with a wavelength of 3.16 nm incident at an angle of 90°, while a multi-layer mirror with about 500 layers reflects about 26% of this radiation.

The invention further relates to a method for manufacturing an above described multi-layer mirror, wherein the non-scattering particles are substantially lithium particles, provided in the form of a lithium halogenide.

The method according to the invention comprises the steps of (i) providing a substrate material of the material for the thin films and of lithium in an ultrahigh vacuum (UHV) deposition chamber, and (ii) alternately depositing on the substrate the material for the thin films and the separating layers, wherein deposition of the thin films takes place in each case by means of an electron beam, and wherein deposition of the separating layers comprises in each case of (iii) depositing lithium by means of an electron beam and (iv) admitting into the UHV deposition chamber in gaseous state a halogen or a material containing halogen.

According to an embodiment of a method according to the invention the admitting in gaseous state of a halogen or a material containing halogen in step (iv) takes place while the admitted material particles are simultaneously ionized and accelerated in the direction of the substrate.

The invention will be elucidated in the following on the basis of embodiments, with reference to the drawings.

In the drawings

Fig. 1 shows a schematic representation of an arrangement for X-ray fluorescence analysis, of which a multi-layer mirror according to the invention forms part,
Fig. 2 shows the absorption coefficients of water and carbon as a function of the wavelength in the wavelength range of 1 nm to about 10 nm,
Fig. 3 shows in cross-section a schematic view of an embodiment of a multi-layer mirror according to the invention, and
Fig. 4 shows the reflectivity of a number of prior art multi-layer mirrors and a multi-layer according to the invention as a function of the wavelength in the wavelength range between 3.12 nm and 3.20 nm.

Corresponding components are designated in the drawings with the same reference numerals.

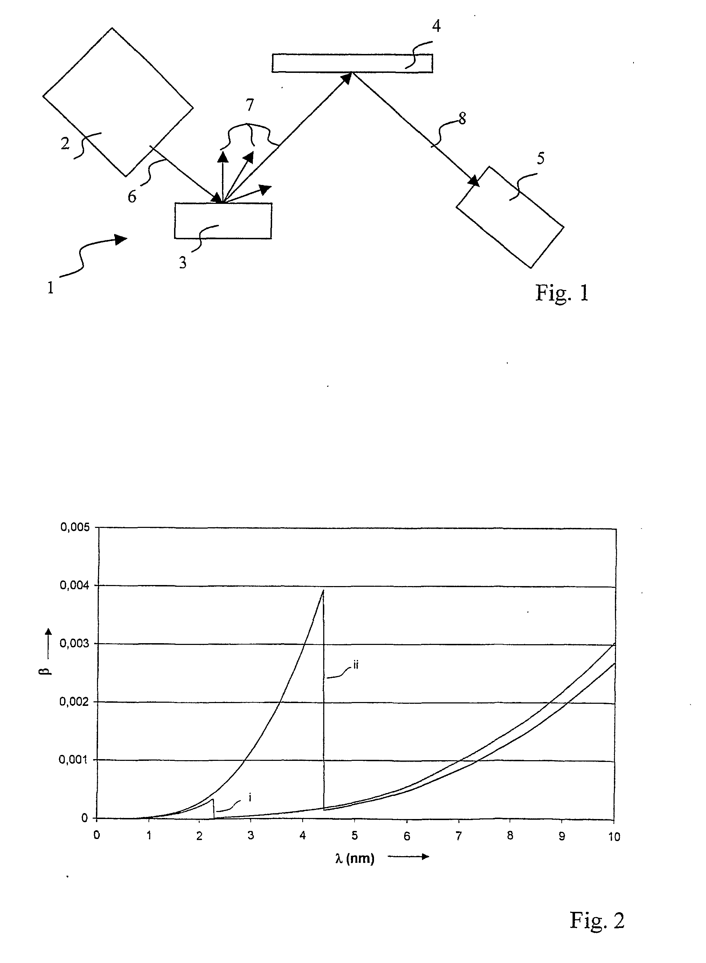

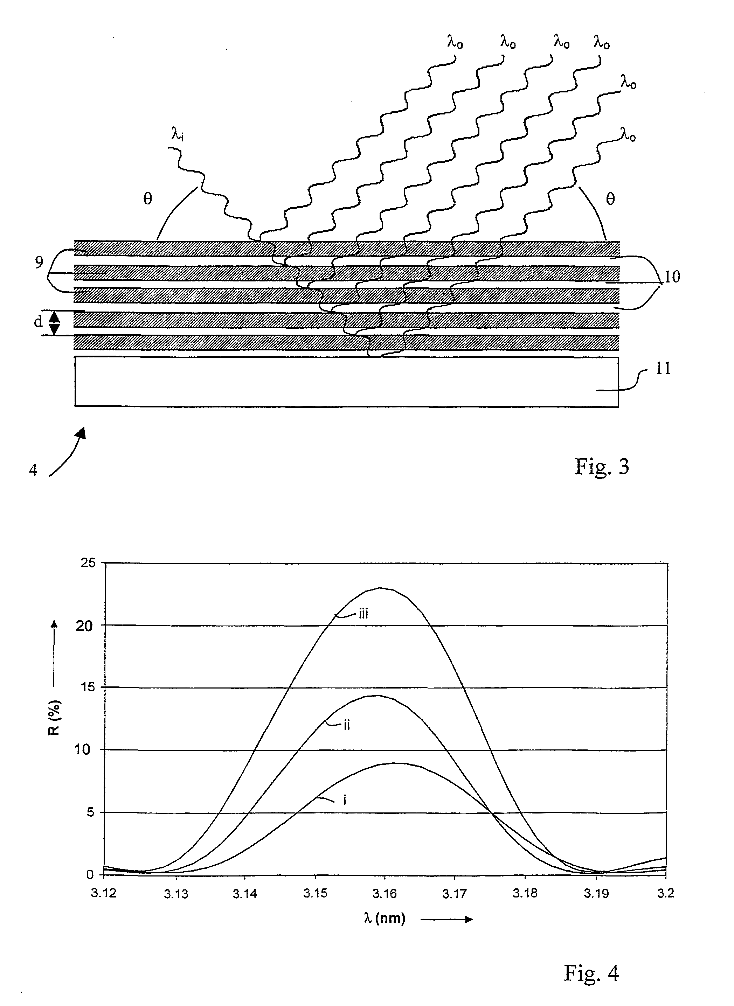

Fig. 1 shows the diagram of an arrangement 1 for X-ray fluorescence, which is made up of an X-ray source 2, a sample 3 for examining, a multi-layer mirror 4 according to the invention and a detector 5. The operating principle of arrangement 1 is as follows. X-ray source 2 generates a beam of photons (represented by arrow 6) at a determined X-ray frequency, which cause fluorescent radiation transitions in sample 3 which result in emission of element-specific radiation for detecting (represented by arrows 7) with a wavelength in the XUV range. A portion of the emitted radiation strikes the multi-layer mirror 4, which acts as a monochromator and reflects a portion with a determined wavelength to detector 5. The monochromator action of multi-layer mirror 4 is further elucidated in the description thereof with reference to fig. 3.

Fig. 2 shows the absorption coefficients $\beta$ of water (curve i) and carbon (curve ii) as a function of the wavelength ($\lambda$) in the wavelength range of 0 nm to about 10 nm. The curves show the abrupt absorption transitions for the K-shell of oxygen (at a photon energy of 543 eV, corresponding with a wavelength $\lambda$ = 2.3 nm) and carbon (at a photon energy of 248 eV, corresponding with a wavelength $\lambda$ = 4.4 nm). The progression of the curves makes clear that the absorption of radiation in the wavelength range between $\lambda$ = 2.4 nm and $\lambda$ = 4.4 nm by carbon is many times greater than the absorption by water, which results in a high contrast in the detection of carbon-containing constituents in an aqueous environment. The wavelength range between $\lambda$ = 2.4 nm and $\lambda$ = 4.4 nm is therefore usually designated the "water window".

Fig. 3 is a schematic view in cross-section of a multi-layer mirror 4 which is built up from a large number (250-500) of layers of alternating thin films 9 of tungsten and separating layers 10 of lithium fluoride, stacked on top of each other on a substrate 11 of a suitable material, for instance silicon wafers or glass. Thin films 9 have the same thickness, as do separating layers 10, wherein the sum of the thicknesses of a thin film 9 and a separating layer 10 defines lattice distance d. In a multi-layer mirror according to the invention the lattice distance d has a value between 0.05 nm and 15 nm. An incoming radiation beam is represented symbolically by a wavy arrow $\lambda_i$, the outgoing radiation beams reflected onto the thin films are represented symbolically by wavy arrows $\lambda_o$. The angle of reflection $\theta$ for a determined wavelength $\lambda$ is determined by the Bragg condition as follows:

$$n\lambda = 2d \sin\theta \, (1 - \cos^2\theta_c / \sin^2\theta)$$

wherein n is a whole number (n = 1, 2, 3, ...) and $\theta_c$ is the critical angle. By adjusting the multi-layer mirror 4 to a determined angle $\theta$ relative to the incident radiation beam $\lambda$, this mirror 4 thus acts as monochromator. It has been found that the bandwidth of an X-ray mirror 4 according to the invention acting as monochromator, expressed as a fraction of the wavelength, is smaller than about 1% ($\Delta\lambda/\lambda \leq 0.01$), and depending on the total number of layers. For the sake of clarity only a few of the total number of thin films 9 and separating layers 10 are shown. It has been found that with a total number of 250 respectively 500 thin films of tungsten the reflectivity of the multi-layer mirror amounts to about 23% respectively 26% at an angle of incidence of 90°.

Fig. 4 shows reflectivity radiation (expressed in %) of a number of multi-layer mirrors as a function of wavelength λ in the wavelength range between 3.12 nm and 3.20 nm, compared to the reflectivity of a prior art multi-layer mirror. Curves i and iii show the reflectivity of a prior art Ni/Si and Ni/Li multi-layer mirrors with 300 and 500 layers. Curve ii shows the reflectivity of a Ni/LiF mirror according to the invention with respectively 200. The figure shows how, for radiation with a wavelength λ = 3.16 nm, the reflectivity increases from about 9% in a prior art multi-layer mirror with 300 layers (curve i) to about 14% in a multi-layer mirror with 200 layers (curve ii) according to the invention.

## Claims

1. Multi-layer mirror (4) for radiation with a wavelength in the wavelength range between 0.1 nm and 30 nm, comprising a stack of thin films (9) substantially comprising scattering particles which scatter the radiation, which thin films (9) are separated by separating layers (10) with a thickness in the order of magnitude of the wavelength of the radiation, which separating layers (10) substantially comprise non-scattering particles which do not scatter the radiation, the scattering particles being selected from the transition elements cobalt (Co), nickel (Ni), tungsten (W), rhenium (Re) and iridium (Ir), the non-scattering particles being substantially passivated particles of lithium (Li), **characterized in that** the lithium particles are provided in the form of a lithium halogenide.

2. Multi-layer mirror (4) as claimed in claim 1, **characterized in that** the lithium halogenide is lithium fluoride (LiF).

3. Multi-layer mirror (4) as claimed in any of the claims 1-2, **characterized in that** the scattering particles are tungsten and rhenium.

4. Multi-layer mirror (4) as claimed in claim 3, **characterized in that** the tungsten and the rhenium are provided in an atomic ratio of about 70% tungsten and about 30% rhenium.

5. Multi-layer mirror (4) as claimed in any of the claims 1-4, **characterized in that** the stack comprises at least 50 layers of thin film (9) separated by separating layers (10).

6. Multi-layer mirror (4) as claimed in claim 5, **characterized in that** the stack comprises at least 100 layers of thin film (9) separated by separating layers (10).

7. Multi-layer mirror (4), as claimed in claim 6, **char-**acterized in that the stack comprises at least 250 layers of thin film (9) separated by separating layers (10).

8. Multi-layer mirror (4) as claimed in claim 7, **characterized in that** the stack comprises about 500 layers of thin film (9) separated by separating layers (10).

9. Method for manufacturing a multi-layer mirror (4) for radiation with a wavelength in the wavelength range between 0.1 nm and 30 nm, which multi-layer mirror (4) comprises a stack of thin films (9) substantially comprising scattering particles which scatter the radiation, which thin films (9) are separated by separating layers (10) with a thickness in the order of magnitude of the wavelength of the radiation, which separating layers (10) substantially comprise non-scattering particles which do not scatter the radiation, wherein the non-scattering particles are substantially passivated lithium (Li) particles, provided in the form of a lithium halogenide, which method comprises the steps of

(i) providing a substrate material (11) of the material for the thin films and of lithium in an ultrahigh vacuum (UHV) deposition chamber, and
(ii) alternately depositing on the substrate (11) the material for the thin films (9) and the separating layers (10), wherein deposition of the thin films takes place in each case by means of an electron beam, **characterized in that** deposition of the separating layers (10) comprises in each case of
(iii) depositing lithium by means of an electron beam and
(iv) admitting into the UHV deposition chamber in gaseous state a halogen or a material containing halogen.

10. Method as claimed in claim 9, **characterized in that** the admitting in gaseous state of a halogen or a material containing halogen in step (iv) takes place while the admitted material particles are simultaneously ionized and accelerated in the direction of the substrate (11).

## Patentansprüche

1. Mehrschichtspiegel (4) für Strahlung mit einer Wellenlänge im Wellenlängenbereich zwischen 0,1 nm und 30 nm, der einen Stapel von Dünnfilmen (9) umfasst, die im Wesentlichen streuende Teilchen enthalten, die die Strahlung streuen, und diese Dünnfilme (9) werden durch Trennschichten (10) mit einer Dicke in der Größenordnung der Wellenlänge der Strahlung getrennt, und diese Trennschichten (10) enthalten im Wesentlichen nichtstreuende Teilchen, die die Strahlung nicht streuen, und die streuenden Teilchen werden aus den Übergangselementen Kobalt (Co), Nickel (Ni), Wolfram (W), Rhenium (Re) und Iridium (Ir) gewählt, und die nichtstreuenden Teilchen sind im Wesentlichen passivierte Teilchen von Lithium (Li), **dadurch gekennzeichnet, dass** die Lithiumteilchen in Form eines Lithiumhalogenids zur Verfügung gestellt werden.

2. Mehrschichtspiegel (4) nach Anspruch 1, **dadurch gekennzeichnet, dass** das Lithiumhalogenid Lithiumfluorid ist.

3. Mehrschichtspiegel (4) nach einem der Ansprüche 1-2, **dadurch gekennzeichnet, dass** die streuenden Teilchen Wolfram und Rhenium sind.

4. Mehrschichtspiegel (4) nach Anspruch 3, **dadurch gekennzeichnet, dass** das Wolfram und das Rhenium im Atomverhältnis von etwa 70% Wolfram und etwa 30% Rhenium zur Verfügung gestellt werden.

5. Mehrschichtspiegel (4) nach einem der Ansprüche 1-4, **dadurch gekennzeichnet, dass** der Stapel zumindest 50 durch Trennschichten (10) getrennte Dünnfilmschichten (9) umfasst.

6. Mehrschichtspiegel (4) nach Anspruch 5, **dadurch gekennzeichnet, dass** der Stapel zumindest 100 durch Trennschichten (10) getrennte Dünnfilmschichten (9) umfasst.

7. Mehrschichtspiegel (4) nach Anspruch 6, **dadurch gekennzeichnet, dass** der Stapel zumindest 250 durch Trennschichten (10) getrennte Dünnfilmschichten (9) umfasst.

8. Mehrschichtspiegel (4) nach Anspruch 7, **dadurch gekennzeichnet, dass** der Stapel zumindest 500 durch Trennschichten (10) getrennte Dünnfilmschichten (9) umfasst.

9. Verfahren zur Herstellung eines Mehrschichtspiegels (4) für Strahlung mit einer Wellenlänge im Wellenlängenbereich zwischen 0,1 nm und 30 nm, und dieser Mehrschichtspiegel (4) umfasst einen Stapel von Dünnfilmen (9), die im Wesentlichen streuende Teilchen enthalten, die die Strahlung streuen, und diese Dünnfilme (9) werden durch Trennschichten (10) mit einer Dicke in der Größenordnung der Wellenlänge der Strahlung getrennt, und diese Trennschichten (10) enthalten im Wesentlichen nichtstreuende Teilchen, die die Strahlung nicht streuen, wobei die nichtstreuenden Teilchen im Wesentlichen passivierte Lithium(Li)-Teilchen sind, die in Form eines Lithiumhalogenids zur Verfügung gestellt werden, und dieses Verfahren umfasst die Schritte:

(i) das in einer Ultrahochvakuum(UHV)-Beschichtungskammer zur Verfügung stellen eines Substratmaterials (11), des Materials für die Dünnfilme und des Lithiums, und
(ii) das abwechselnd auf dem Substrat (11) Auftragen des Materials für die Dünnfilme (9) und der Trennschichten (10), wobei das Auftragen der Dünnfilme jeweils mit Hilfe eines Elektronenstrahls geschieht, **dadurch gekennzeichnet, dass** das Auftragen der Trennschichten (10) jeweils
(iii) das Auftragen von Lithium mit Hilfe eines Elektronenstrahls und
(iv) das in die UHV-Beschichtungskammer Einlassen in gasförmigem Zustand eines Halogens oder eines halogenhaltigen Materials umfasst.

10. Verfahren nach Anspruch 9, **dadurch gekennzeichnet, dass** das Einlassen in gasförmigem Zustand eines Halogens oder eines halogenhaltigen Materials in Schritt (iv) bei gleichzeitiger Ionisierung und Beschleunigung in Richtung des Substrats (11) der eingelassenen Materialteilchen geschieht.


## Revendications

1. Miroir à couches multiples (4) pour un rayonnement avec une longueur d'onde dans la gamme de longueur d'onde comprise entre 0,1 nm et 30 nm, comprenant une superposition de films minces (9) comprenant essentiellement des particules dispersantes qui dispersent le rayonnement, lesdits films minces (9) étant séparés par des couches de séparation (10) dont l'épaisseur correspond à l'ordre de grandeur de la longueur d'onde du rayonnement, lesdites couches de séparation (10) comprenant essentiellement des particules non dispersantes qui ne dispersent pas le rayonnement, les particules dispersantes étant sélectionnées parmi les éléments de transition suivants: le cobalt (Co), le nickel (Ni), le tungstène (W), le rhénium (Re) et l'iridium (Ir), les particules non dispersantes étant essentiellement des particules passivées de lithium (Li), **caractérisé en ce que** les particules de lithium sont présentes sous la forme d'un halogénure de lithium.

2. Miroir à couches multiples (4) selon la revendication 1, **caractérisé en ce que** l'halogénure de lithium est du fluorure de lithium (LiF).

3. Miroir à couches multiples (4) selon l'une quelconque des revendications 1 et 2, **caractérisé en ce que** les particules dispersantes sont composées de tungstène et de rhénium.

4. Miroir à couches multiples (4) selon la revendication 3, **caractérisé en ce que** le tungstène et le rhénium sont présents selon le rapport atomique suivant: environ 70 % de tungstène et environ 30 % de rhénium.

5. Miroir à couches multiples (4) selon l'une quelconque des revendications 1 à 4, **caractérisé en ce que** la superposition comprend au moins 50 couches de film minces (9) séparées par des couches de séparation (10).

6. Miroir à couches multiples (4) selon la revendication 5, **caractérisé en ce que** la superposition comprend au moins 100 couches de film mince (9) séparées par des couches de séparation (10).

7. Miroir à couches multiples (4) selon la revendication 6, **caractérisé en ce que** la superposition comprend au moins 250 couches de film mince (9) séparées par des couches de séparation (10).

8. Miroir à couches multiples (4) selon la revendication 6, **caractérisé en ce que** la superposition comprend environ 500 couches de film mince (9) séparées par des couches de séparation (10).

9. Procédé pour fabriquer un miroir à couches multiples (4) pour un rayonnement avec une longueur d'onde dans la gamme de longueur d'onde comprise entre 0,1 nm et 30 nm, ledit miroir à couches multiples (4) comprenant une superposition de films minces (9) comprenant essentiellement des particules dispersantes qui dispersent le rayonnement, lesdits films minces (9) étant séparés par des couches de séparation (10) dont l'épaisseur correspond à l'ordre de grandeur de la longueur d'onde du rayonnement, lesdites couches de séparation (10) comprenant essentiellement des particules non dispersantes qui ne dispersent pas le rayonnement, les particules non dispersantes étant essentiellement des particules passivées de lithium (Li), présentes sous la forme d'un halogénure de lithium, ledit procédé comprenant les étapes consistant à:

   (i) garnir une matière de substrat (11), de la matière prévue pour les films minces et de lithium dans une chambre de dépôt à ultravide (UHV; et

   (ii) déposer d'une façon alternée sur le substrat (11) la matière prévue pour les films minces (9) et pour les couches de séparation (10), dans lequel le dépôt des films minces est effectué dans chaque cas au moyen d'un faisceau d'électrons, **caractérisé en ce que** le dépôt des couches de séparation (10) comprend dans chaque cas:
   (iii) un dépôt de lithium au moyen d'un faisceau d'électrons; et
   (iv) l'admission dans la chambre de dépôt UHV à l'état gazeux d'un halogène ou d'une matière contenant un halogène.

10. Procédé selon la revendication 9, **caractérisé en ce que** l'admission à l'état gazeux d'un halogène ou d'une matière contenant un halogène dans l'étape (iv) se produit pendant que les particules de matière admises sont simultanément ionisées et accélérées dans la direction du substrat (11).

Fig. 1

Fig. 2

Fig. 3

Fig. 4